(19) Europäisches Patentamt / European Patent Office / Office européen des brevets

(11) **EP 2 504 927 B1**

(12) **EUROPEAN PATENT SPECIFICATION**

(45) Date of publication and mention
of the grant of the patent:
**18.04.2018 Bulletin 2018/16**

(21) Application number: **09851731.1**

(22) Date of filing: **25.11.2009**

(51) Int Cl.:
*H04B 1/38* (2015.01)     *H01Q 21/00* (2006.01)
*H01Q 1/52* (2006.01)     *H01Q 3/26* (2006.01)
*H01Q 21/06* (2006.01)

(86) International application number:
**PCT/SE2009/051338**

(87) International publication number:
**WO 2011/065876 (03.06.2011 Gazette 2011/22)**

(54) **ARRAY ANTENNA SYSTEM**

GRUPPENANTENNENSYSTEM

SYSTÈME D'ANTENNES RÉSEAUX

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**03.10.2012 Bulletin 2012/40**

(73) Proprietor: **Saab AB**
**581 88 Linköping (SE)**

(72) Inventor: **HOLTER, Henrik**
**S-132 42 Saltsjö-boo (SE)**

(74) Representative: **Zacco Sweden AB**
**P.O. Box 5581**
**114 85 Stockholm (SE)**

(56) References cited:
**EP-A1- 1 670 095**     **US-A1- 2009 130 992**

• **CORCOLES J ET AL: "Mutual Coupling
Compensation in Arrays Using a Spherical Wave
Expansion of the Radiated Field", IEEE
ANTENNAS AND WIRELESS PROPAGATION
LETTERS, IEEE, PISCATAWAY, NJ, US, vol. 8, 9
January 2009 (2009-01-09), - 22 April 2009
(2009-04-22), pages 108-111, XP011330904, ISSN:
1536-1225, DOI: 10.1109/LAWP.2008.2012276**
• **AUMANN H M ET AL: "PHASED ARRAY
CALIBRATIONS USING MEASURED ELEMENT
PATTERNS", IEEE ANTENNAS AND
PROPAGATION SOCIETY INTERNATIONAL
SYMPOSIUM DIGEST. NEWPORT BEACH, JUNE
18 - 23, 1995. HELD IN CONJUNCTION WITH THE
USNC/URSI NATIONAL RADIO SCIENCE
MEETING; [IEEE ANTENNAS AND
PROPAGATION SOCIETY INSTERNATIONAL
SYMPOSIUM DIGEST], N, vol. 2, 18 June 1995
(1995-06-18), pages 918-921, XP000588477, ISBN:
978-0-7803-2720-7**

## Description

TECHNICAL FIELD

The invention refers to a method for an antenna system comprising a transmitting phase array antenna comprising a transmitting antenna subarray comprising a number Q antenna elements transmitting on a first frequency and a receiving phase array antenna comprising a receiving antenna subarray comprising a number P antenna elements. The transmitting antenna subarray antenna is positioned at a distance relative the receiving antenna subarray antenna. The transmitting antenna subarray antenna transmits a first signal at a first time period and the receiving antenna subarray antenna receives the first signal at least partly within the first time period causing a coupling between the transmitting antenna subarray antenna and the receiving antenna subarray antenna.

BACKGROUND ART

In today's antenna system comprising a transmitting array antenna and a receiving array antenna, there is coupling between the transmitting antenna and the receiving antenna when they are used at the same time. This is a problem since the transmitting antenna could be too "loud" for a receiving antenna. In prior art the problem with coupling have been solved by introduction of physical obstacles such as walls, etc.

Coupling between subarrays in an array antenna may constitute a major problem since a transmitting antenna subarray may make another subarray for receive more or less useless because of interference.

Reduction of the subarray coupling is not an easy task. The large bandwidth of broadband array antennas is a result of strong element coupling.

The possibility to use existing adaptive beam-forming techniques to reduce the coupling is known in far field pattern, but the previously known technique do not reduce the subarray coupling.

The conclusion is that traditional adaptive beam-forming techniques are not appropriate for reduction of subarray coupling. The document CORCOLES J ET AL: "Mutual Coupling Compensation in Arrays Using a Spherical Wave Expansion of the Radiated Field",IEEE ANTENNAS AND WIRELESS PROPAGATION LETTERS, IEEE, PISCATAWAY, NJ, US, vol. 8, 9 January 2009 (2009-01-09), - 22 April 2009 (2009-04-22), pages 108-111, XP011330904,ISSN: 1536-1225, DOI: 10.1109/LAWP.2008.2012276, discloses a method for an antenna system according to the preamble of claim 1.

SUMMARY

In view of prior art there still exists a need for an antenna system, comprising a transmitting array antenna and a receiving array antenna, where the mutual coupling between subarrays within a combined transmitting and receiving array antenna or between a transmitting array antenna and a receiving array antenna are nullified or at least reduced. The Invention refers to a method where a transmitting antenna uses adaptive beam-forming functions with a constraint based on the knowledge of coupling between the antenna elements in the transmitting antenna and the receiving antenna, where a scattering matrix between the transmitting antenna and the receiving antenna is used. The scattering matrix comprises a coupling coefficient between each antenna element in the transmitting antenna and each antenna element in the receiving antenna element.

In the description of the invention the transmitting array antenna is described as a transmitting antenna subarray antenna and the receiving antenna is described as a receiving antenna subarray antenna, since the invention refers to an antenna system comprising a transmitting antenna and a receiving antenna regardless of whether if they are comprised in a combination array antenna or whether if they are two separate units.

The scattering matrix is thus used as constraint in an equation to modify a quiescent excitation $x_0$ in the transmitting antenna subarray antenna in order to get nulls at the elements in the receiving antenna subarray antenna by controlling the elements in the transmitting antenna subarray antenna to transmit a signal that nullifies the coupling energy in the receiving antenna subarray antenna.

Hence, the invention refers to a new method for subarray coupling reduction.

The invention refers to nullifying transmitted energy from a transmitting antenna in an area connected to a receiving antenna.

The position of each antenna element in the transmitting antenna subarray antenna relative each element in the receiving antenna subarray antenna is not important per se since according to one example, the coupling can be measured without knowledge of the position in order to create the scattering matrix. However, if the position is changed after the measurement, a new measurement has to be done in order to create a new scattering matrix. Hence, the position must be fixed for each measurement. If the relative position and thus distance is known, it is possible to calculate the scattering matrix. The measurement has the advantage over the calculation that it becomes more precise and that reflections in surrounding structures will be part of the measurement. Both the measurement and the calculation techniques are known from prior art.

The invention refers to a mathematical algorithm that calculates how the transmitting antenna shall use the apertures in order to create the nullified area(s) in the transmitting pattern at the receiving antenna.

The method can dynamically shift the nullifying pattern in order to cover different receiving antennas at different points in time.

A coupling matrix must be determined for use in the algorithm. The coupling matrix can be decided using measurements or calculation. Measurement in situ is preferable since reflections from the surrounding structure will then inherently be part of the coupling matrix.

The invention can be used on both group antennas of multifunction type and on a number of separated group antennas.

The invention has the following advantages:

The method gives a better performance of an already existing group antenna used for both transmitting and receiving.

The method is forceful and simple to implement since there is only calculations on already existing devices.

The method has very little impact on the radiation diagram of the transmitting antenna.

No extra hardware is needed. The already existing functions, in the group antenna, regarding control of amplitude and phase are used. The control of amplitude and phase for the different elements in the antenna system for beam forming purposes is well known in the prior art.

The method gives increased antenna performance.

The method gives increased field of application of array antennas.

The invention can be used in all type of phased array antennas where the coupling between subarrays within multifunction array antennas or between array antennas needs to be reduced

The invention relies on the possibility to detect or calculate the coupling between the subarray of the transmitting antenna and the subarray of the receiving antenna and to use the scattering matrix between the subarrays as a constraint with an antenna pattern synthesis method, in order to reduce the coupling. A constraint with the least mean square pattern synthesis method is used in the invention.

One example on how to use the constraint is the least mean square pattern synthesis method as described below, but other solutions could be possible with another method for solving a problem aiming to modify the quiescent excitation in the transmitting antenna subarray in order to get nulls at the elements in the receiving antenna subarray.

In order to explain the invention further an example will be described below where the antenna system is one of many possibilities, but where the calculations can be used on all the possible antenna system referring to the invention, i.e. a transmitting array antenna and a receiving array antenna where the coupling from the transmitting antenna to the receiving antenna needs to be reduced.

The example refers to an array where the antenna elements are arranged in a planar rectangular lattice with element spacing d in both spatial directions and is used in the derivation of the method according to the invention. The final result that shows how to modify the array excitation coefficients is valid for any type of planar or non-planar array lattice.

Assume that a transmitting antenna subarray TX is used as a transmitting antenna and that a receiving antenna subarray RX is used as the receiving antenna. The goal is to reduce the coupling from the transmitting antenna subarray TX to the receiving antenna subarray RX with as little effect as possible on the transmitting antenna subarray TX far-field pattern. The transmitting antenna subarray TX far-field pattern is described by the array factor

$$
\begin{aligned}
F &= \sum_m \sum_n x_{mn} e^{-jkd(mu+nv)} \\
k &= 2\pi/\lambda \\
u &= \sin\theta \cos\varphi \\
v &= \sin\theta \sin\varphi
\end{aligned}
\qquad (1)
$$

Where $x_{mn}$ ($x$ in vector form) is the complex excitation of element ($m$, $n$) in transmitting antenna subarray TX, d is the element spacing, $k$ is the wavenumber, $\lambda$ is the wavelength and ($\theta$,$\varphi$) is the direction in space in spherical coordinates. The array normal direction is given by $\theta$=0 degrees. Let $F_0$ be the quiescent pattern of the transmitting antenna subarray obtained when no constraints regarding nulls in receiving antenna subarray RX have been applied

$$
F_0 = \sum_m \sum_n x_{0mn} e^{-jkd(mu+nv)}
\qquad (2)
$$

where $x_{0mn}$ ($x_0$ in vector form) is the corresponding quiescent excitation.

Let $F_a$ be the approximate pattern obtained when constraints regarding nulls have been applied

$$F_a = \sum_m \sum_n x_{amn} e^{-jkd(mu+nv)}$$

(3)

where $x_{amn}$ ($x_a$ in vector form) is the corresponding excitation. Let $F_a$ be the closest approximation, in the least mean square sense, to the quiescent pattern $F_0$.

The coupling, b, from the elements in transmitting antenna subarray TX to the elements in receiving antenna subarray RX is

$$b = S_{BA} x$$

(4)

where $S_{BA}$ is the scattering-matrix with the transmitting antenna subarray TX to receiving antenna subarray RX mutual coupling coefficients. $S_{BA}$ is a $P \times Q$ matrix, where $P$ and $Q$ is the number of elements in receiving antenna subarray RX and transmitting antenna subarray TX respectively.

The synthesis problem can then be stated as: find the approximate pattern $F_a$ such that the mean square difference

$$\varepsilon(F_a) = \frac{d^2}{\lambda^2} \int_{-\frac{\lambda}{2d}}^{\frac{\lambda}{2d}} \int_{-\frac{\lambda}{2d}}^{\frac{\lambda}{2d}} |F_0(u,v) - F_a(u,v)|^2 \, dv \, du = \min$$

(5)

subject to the constraint

$$S_{BA} x_a = 0$$

(6)

Parseval's identity on equation (5) gives

$$\varepsilon(F_a) = \frac{d^2}{\lambda^2} \int_{-\frac{\lambda}{2d}}^{\frac{\lambda}{2d}} \int_{-\frac{\lambda}{2d}}^{\frac{\lambda}{2d}} |F_0(u,v) - F_a(u,v)|^2 \, dv \, du = \sum_m \sum_n |x_{0mn} - x_{amn}|^2 =$$

$$(x_0 - x_a)^T (\overline{x}_0 - \overline{x}_a) = \|x_0 - x_a\|^2 = \varepsilon(x_a)$$

(7)

Where the horizontal bar symbol denote complex conjugate. Superscript T denotes transpose. Parseval's identity is known per se in prior art.

The synthesis problem now becomes

$$\varepsilon(x_a) = \|x_0 - x_a\|^2 = \min$$

(8)

$$g(x_a) = S_{BA} x_a = 0$$

(9)

The solution to this optimization problem can be obtained by using "Lagrange's multipliers"

$$\frac{\partial}{\partial x_{ai}}\left(\varepsilon(x_a) + \sum_{j=1}^{P} \beta_j g_j(x_a)\right) = 0, i = 1..Q, \tag{10}$$

where $\beta$ is a complex vector to be determined. Element index $m, n$ has for simplicity been replaced by the single index $i, j$ is the receiving antenna subarray RX element index. Lagrange's multipliers are known per se in prior art. Substitution of equation (8) and equation (9) in equation (10) gives

$$\frac{\partial}{\partial x_{ai}}\left((x_0 - x_a)^T(\bar{x}_0 - \bar{x}_a) + \sum_{j=1}^{P} \beta_j S_{BA,\text{row }j} x_a\right) =$$

$$\frac{\partial}{\partial x_{ai}}\left(x_0^T \bar{x}_0 - x_0^T \bar{x}_a - x_a^T \bar{x}_0 + x_a^T \bar{x}_a + \sum_{j=1}^{P} \beta_j S_{BA,\text{row }j} x_a\right) =$$

$$-\bar{x}_{0i} + \bar{x}_{ai} + \sum_{j=1}^{P} \beta_j S_{BA,ji} = -\bar{x}_{0i} + \bar{x}_{ai} + \beta^T S_{BA,\text{column }i} = 0 \Leftrightarrow, \tag{11}$$

$$-\bar{x}_0 + \bar{x}_a + \left(\beta^T S_{BA}\right)^T = 0 \Leftrightarrow$$

$$x_a = x_0 - S_{BA}^* \bar{\beta}$$

where superscript * denote conjugate transpose. $\bar{\beta}$ is determined from equation (9) and (11)

$$0 = S_{BA} x_a = S_{BA}\left(x_0 - S_{BA}^* \bar{\beta}\right) = S_{BA} x_0 - S_{BA} S_{BA}^* \bar{\beta} \Rightarrow$$

$$\bar{\beta} = \left(S_{BA} S_{BA}^*\right)^{-1} S_{BA} x_0 \tag{12}$$

Substitution of equation (12) in equation (11) finally gives

$$x_a = x_0 - S_{BA}^*\left(S_{BA} S_{BA}^*\right)^{-1} S_{BA} x_0 = \left(I - S_{BA}^*\left(S_{BA} S_{BA}^*\right)^{-1} S_{BA}\right) x_0, \tag{13}$$

where $I$ is the identity matrix. Equation (13) shows how to modify the quiescent excitation $x_0$ in transmitting antenna subarray TX in order to get nulls at the elements in the receiving antenna subarray RX.

Some of the properties of the method according to the invention are:

- It is used on the transmitting antenna subarray TX. The only information needed in order to use the method is the scattering matrix between the transmitting antenna subarray TX and the receiving antenna subarrays RX. Information about the excitation of the receiving antenna subarray RX is not needed. Since the method is used on the transmitting antenna subarray TX it does not affect beam-forming on the receiving antenna subarray RX.

- The term between the parentheses on the right hand side of equation (13) is independent of the array antenna scan direction and needs to be calculated only once for each frequency. The frequency independency is true if the coupling coefficients between the elements in the transmitting antenna subarray TX and the receiving antenna subarray RX do not change with time.

- The best way to determine the coupling coefficients from the transmitting antenna subarray TX to the receiving antenna subarray RX is probably to measure them when the array has been integrated since the coupling to the environment (radome etc) close to the array then will be included in the coupling coefficients. It may be possible to use the calibration function, if any, in the array to determine the coupling coefficients.

- If the number of elements in the transmitting antenna subarray TX and receiving antenna subarray RX is $Q$ and $P$ respectively then P < Q is a necessary condition since the number of free variables is $Q$.

BRIEF DESCRIPTION OF DRAWINGS

The invention will below be described in connection to a number of drawings, in which:

Fig. 1 schematically shows an antenna system comprising a combination array antenna according to the invention comprising a transmitting antenna subarray and a receiving antenna subarray;

Fig. 2 schematically shows an antenna system according to the invention comprising a separate transmitting antenna subarray and a separate receiving antenna subarray facing essentially in the same direction;

Fig. 3 schematically shows an antenna system according to the invention comprising a separate transmitting antenna subarray and a separate receiving antenna subarray facing essentially in the opposite directions;

Fig. 4 schematically shows a flow chart of the method according the invention;

Figs. 5a and 5b show the power coupling from the transmitting antenna subarray TX and receiving antenna subarrays RX over a 1 GHz frequency band at 10 GHz for the transmitting antenna subarray TX scan direction $(\theta_0, \varphi_0)$=(0°, 0°), without the use of the inventive method and with the use of the inventive method respectively;

Fig. 6a and 6b show the power coupling from the transmitting antenna subarray TX and receiving antenna subarrays RX over a 1 GHz frequency band at 10 GHz for the transmitting antenna subarray TX scan direction $(\theta_0, \varphi_0)$=(60°, 45°), without the use of the inventive method and with the use of the inventive method respectively;

Fig. 7a and 7b schematically show the power coupling from the transmitting antenna subarray TX to the receiving antenna subarray RX over a 1 GHz frequency band at 10 GHz for the transmitting antenna subarray TX scan direction $(\theta_0, \varphi_0)$=(60°,225°), without the use of the inventive method and with the use of the inventive method respectively;

Fig. 8 schematically shows a transmitting antenna subarray TX with fixed position and four different receiving antenna subarray Rx positions;

Figs 9a-9d schematically show the transmitting antenna subarray TX power coupled to the Receiving antenna subarray RX for a 9.5-10.5 GHz frequency band with and without the method according to the invention and for the four different antenna subarray Rx positions in figure 8;

Fig. 10 schematically shows five different sized transmitting antenna subarrays TX relative a receiving antenna subarray Rx with fixed size, and in which;

Figs. 11a-11e schematically show the coupling of the transmitting antenna subarrays Tx to the receiving antenna subarray RX for the different cases in figure 10, with the use of the method according to the invention and without the use of the method.

EXAMPLES OF THE INVENTION

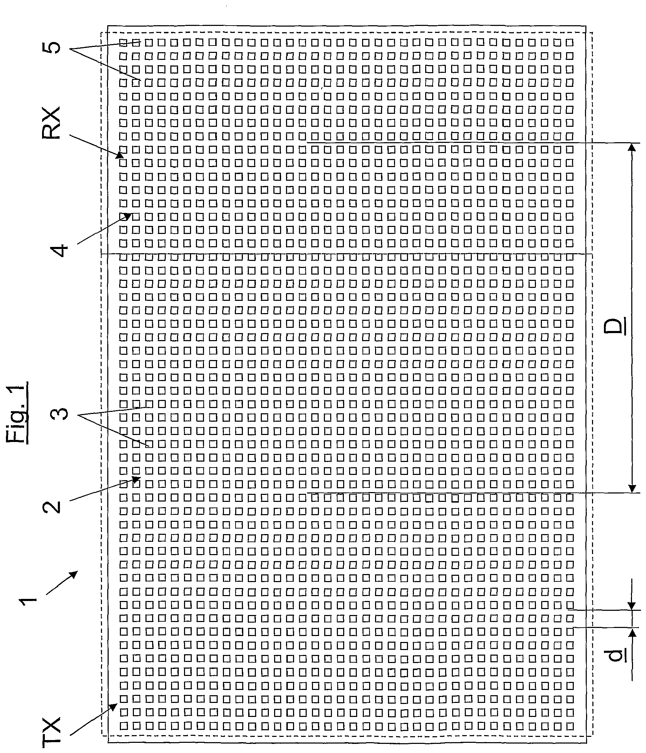

Fig. 1 schematically shows an antenna system 1 comprising a combination array antenna according to the invention comprising a transmitting phase array antenna 2 comprising a transmitting antenna subarray TX comprising a number Q antenna elements 3 transmitting on a first frequency and a receiving phase array antenna 4 comprising a receiving antenna subarray RX comprising a number P antenna elements 5. The transmitting antenna subarray antenna TX is positioned at a centre distance D relative the receiving antenna subarray antenna RX. The transmitting antenna subarray antenna TX is arranged to transmit a first signal at a first time period and wherein the receiving antenna subarray antenna RX is arranged to receive the first signal at least partly within the first time period causing a coupling between the transmitting antenna subarray antenna TX and the receiving antenna subarray antenna RX.
The coupling between the antenna elements in the transmitting antenna subarray antenna TX and the antenna elements in the receiving antenna subarray antenna RX are measured or calculated and the coupling data is stored as a scattering-matrix $S_{BA}$ in a memory and that the scattering matrix $S_{BA}$ is then used in an equation (13) to modify a quiescent excitation $x_0$ in the transmitting antenna subarray TX in order to get nulls at the elements in receiving antenna subarray RX by controlling the elements in the transmitting antenna subarray antenna (TX) to transmit a signal that nullifies the coupling energy in the receiving antenna subarray antenna RX. The calculation is advantageously made by a machine, for example a computer, and the transmitting antenna is controlled by any suitable control means that can control the antenna elements 3 in the transmitting antenna subarray.

In figure 1 the antenna transmitting antenna subarray TX and the receiving antenna subarray RX are positioned in a combination antenna being essentially flat. However any shape is possible for the antenna transmitting antenna subarray TX and the receiving antenna subarray RX.

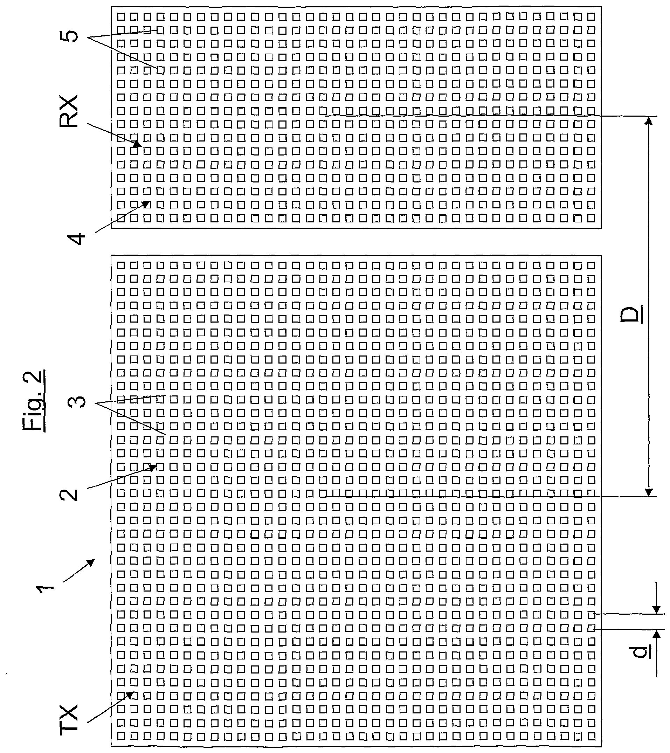

Fig. 2 schematically shows an antenna system according to the invention comprising a separate transmitting antenna subarray TX and a separate receiving antenna subarray RX facing essentially in the same direction. The difference between the system in figure 1 and the system in figure 2 is the relative position of the transmitting antenna subarray TX and the receiving antenna subarray RX. The described and below described method could be applied on both system by measuring or calculating the coupling matrix.

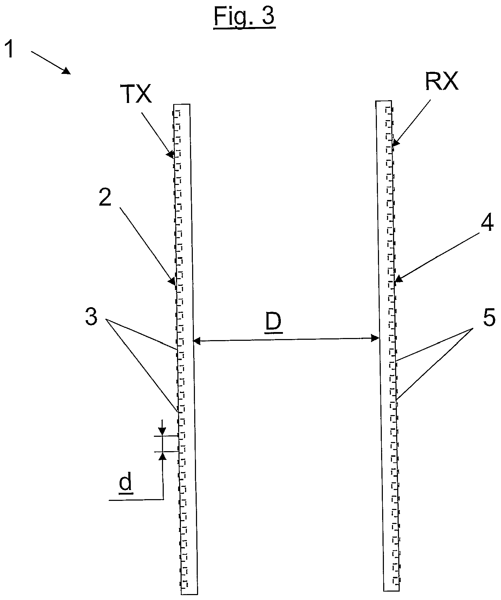

Fig. 3 schematically shows an antenna system according to the invention comprising a separate transmitting antenna subarray and a separate receiving antenna subarray facing essentially in the opposite directions. The difference between the system in figure 1 and the system in figure 3 is the relative position of the transmitting antenna subarray TX and the receiving antenna subarray RX. The described and below described method could be applied on both system by measuring or calculating the coupling matrix.

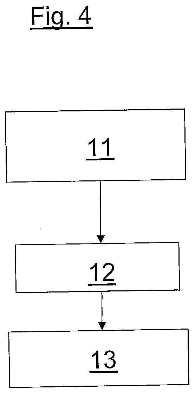

Fig. 4 schematically shows a flow chart of the method according the invention.

Box 11 shows that a scattering matrix is created by either measuring the coupling between each element in the transmitting antenna subarray TX and each element in the receiving antenna subarray RX, or by measuring the distance between each element in the transmitting antenna subarray TX and each element in the receiving antenna subarray antenna RX and using knowledge about material and geometrical features of the transmitting antenna subarray TX and the receiving antenna subarray RX, and then calculating the coupling and creating the scattering matrix.

Box 12 shows that the following calculations are made:

a modification of a quiescent excitation $x_0$ in transmitting antenna subarray TX is calculated by the following steps:

a transmitting antenna subarray TX far-field pattern is described by the array factor

$$F = \sum_m \sum_n x_{mn} e^{-jkd(mu+nv)}$$
$$k = 2\pi/\lambda$$
$$u = \sin\theta\cos\varphi \qquad\qquad (1)$$
$$v = \sin\theta\sin\varphi$$

where $x_{mn}$ ($x$ in vector form) is the complex excitation of element $(m, n)$ in transmitting antenna subarray TX, d is the element spacing, $k$ is the wavenumber, $\lambda$ is the wavelength and $(\theta,\varphi)$ is the direction in space in spherical coordinates. The array normal direction is given by $\theta=0$ degrees.

Let $F_0$ be the quiescent pattern transmitting antenna subarray TX obtained when no constraints regarding nulls in receiving antenna subarray RX have been applied

$$F_0 = \sum_m \sum_n x_{0mn} e^{-jkd(mu+nv)} \qquad\qquad (2)$$

where $x_{0mn}$ ($x_0$ in vector form) is the corresponding excitation.

Let $F_a$ be the approximate pattern obtained when constraints regarding nulls have been applied

$$F_a = \sum_m \sum_n x_{amn} e^{-jkd(mu+nv)} \qquad\qquad (3)$$

where $x_{amn}$ ($x_a$ in vector form) is the corresponding excitation. Let $F_a$ be the closest approximation, in the least mean square sense, to the quiescent pattern $F_0$.

The coupling, $b$, from the elements in transmitting antenna subarray TX to the elements in receiving antenna subarray RX is

$$b = S_{BA} x ,$$

(4)

where $S_{BA}$ is the scattering-matrix with the transmitting antenna subarray TX to receiving antenna subarray RX mutual coupling coefficients. $S_{BA}$ is a $P \times Q$ matrix, where $P$ and $Q$ is the number of elements in receiving antenna subarray RX and transmitting antenna subarray TX respectively.

The synthesis problem can then be stated as: find the approximate pattern $F_a$ such that the mean square difference

$$\varepsilon(F_a) = \frac{d^2}{\lambda^2} \int_{-\frac{\lambda}{2d}}^{\frac{\lambda}{2d}} \int_{-\frac{\lambda}{2d}}^{\frac{\lambda}{2d}} |F_0(u,v) - F_a(u,v)|^2 \, dv du = \min$$

(5)

subject to the constraint

$$S_{BA} x_a = 0 .$$

(6)

Parseval's identity on equation (5) gives

$$\varepsilon(F_a) = \frac{d^2}{\lambda^2} \int_{-\frac{\lambda}{2d}}^{\frac{\lambda}{2d}} \int_{-\frac{\lambda}{2d}}^{\frac{\lambda}{2d}} |F_0(u,v) - F_a(u,v)|^2 \, dv du = \sum_m \sum_n |x_{0mn} - x_{amn}|^2 =$$

$$(x_0 - x_a)^T (\bar{x}_0 - \bar{x}_a) = \|x_0 - x_a\|^2 = \varepsilon(x_a)$$

(7)

Where the horizontal bar symbol denote complex conjugate. Superscript T denotes transpose.

The synthesis problem now becomes

$$\varepsilon(x_a) = \|x_0 - x_a\|^2 = \min$$

(8)

$$g(x_a) = S_{BA} x_a = 0$$

(9)

The solution to this optimization problem can be obtained by using "Lagrange's multipliers"

$$\frac{\partial}{\partial x_{ai}} \left( \varepsilon(x_a) + \sum_{j=1}^{P} \beta_j g_j(x_a) \right) = 0, i = 1..Q ,$$

(10)

The solution to this optimization problem is unequivocal and can be obtained by using the above described "Lagrange's multipliers" or any other suitable technique.

where $\beta$ is a complex vector to be determined. Element index $m$, $n$ has for simplicity been replaced by the single index $i, j$ is the receiving antenna subarray RX element index. Substitution of equation (8) and equation (9) in equation (10) gives

$$\frac{\partial}{\partial x_{ai}}\left( (x_0 - x_a)^T (\bar{x}_0 - \bar{x}_a) + \sum_{j=1}^{P} \beta_j S_{BA,\text{row } j} x_a \right) =$$

$$\frac{\partial}{\partial x_{ai}}\left( x_0^T \bar{x}_0 - x_0^T \bar{x}_a - x_a^T \bar{x}_0 + x_a^T \bar{x}_a + \sum_{j=1}^{P} \beta_j S_{BA,\text{row } j} x_a \right) =$$

$$-\bar{x}_{0i} + \bar{x}_{ai} + \sum_{j=1}^{P} \beta_j S_{BA,ji} = -\bar{x}_{0i} + \bar{x}_{ai} + \beta^T S_{BA,\text{column } i} = 0 \Leftrightarrow , \qquad (11)$$

$$-\bar{x}_0 + \bar{x}_a + \left( \beta^T S_{BA} \right)^T = 0 \Leftrightarrow$$

$$x_a = x_0 - S_{BA}^* \bar{\beta}$$

where superscript * denote conjugate transpose. $\bar{\beta}$ is determined from equation (9) and (11)

$$0 = S_{BA} x_a = S_{BA}\left( x_0 - S_{BA}^* \bar{\beta} \right) = S_{BA} x_0 - S_{BA} S_{BA}^* \bar{\beta} \Rightarrow$$

$$\bar{\beta} = \left( S_{BA} S_{BA}^* \right)^{-1} S_{BA} x_0 \qquad (12)$$

Substitution of equation (12) in equation (11) finally gives

$$x_a = x_0 - S_{BA}^* \left( S_{BA} S_{BA}^* \right)^{-1} S_{BA} x_0 = \left( I - S_{BA}^* \left( S_{BA} S_{BA}^* \right)^{-1} S_{BA} \right) x_0 , \qquad (13)$$

where $I$ is the identity matrix. Equation (13) shows how to modify the quiescent excitation $x_0$ in the transmitting antenna subarray TX in order to get nulls at the elements in subarray B.

Box 13 shows that equation (13) is used to control the elements in the transmitting antenna subarray antenna TX to transmit a signal that nullifies the coupling energy in the receiving antenna subarray antenna RX.

Below follows a numerical example where the transmitting antenna subarray comprises 32×32 elements and where the receiving antenna subarray comprises 16×16 element having subarray coupling, according to the description in connection to any one of figures 1-4.

Equation (13) has been applied in order to reduce the coupling between a transmitting antenna subarray TX with 32x32 elements and a receiving antenna subarray antenna RX with 16×16 elements. The subarrays are positioned in opposite corners of an array with 80x80 antenna elements (not shown). The antenna elements, in both the transmitting antenna subarray TX and the receiving antenna subarray antenna RX, are arranged in a quadratic lattice with element spacing d in both spatial directions. The mutual coupling coefficients have been determined from measurements. The transmitting antenna subarray antenna TX have a uniform taper and is steered to three different directions $(\theta_0, \varphi_0)$=(0°, 0°), (60°,45°) (i.e. toward the receiving antenna subarray RX) and (60°,225°) (i.e. away from the Receiving antenna subarray RX), by way of conventional methods.

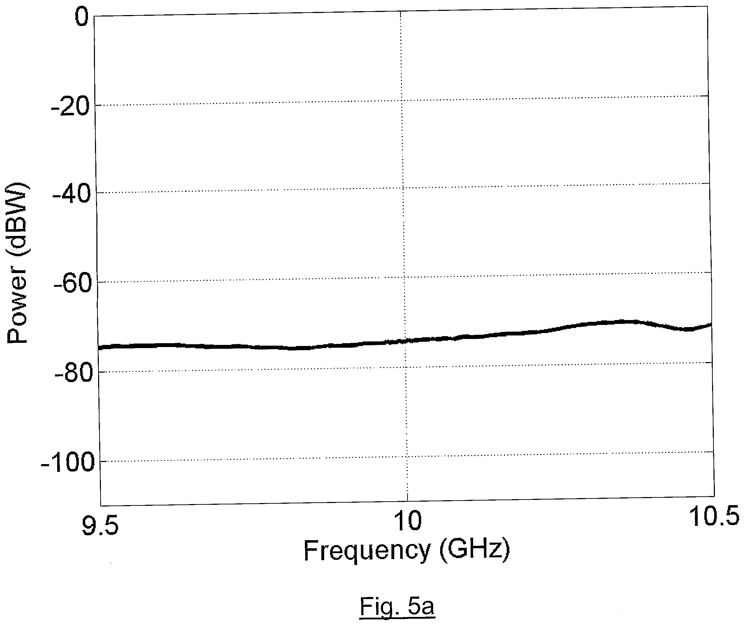

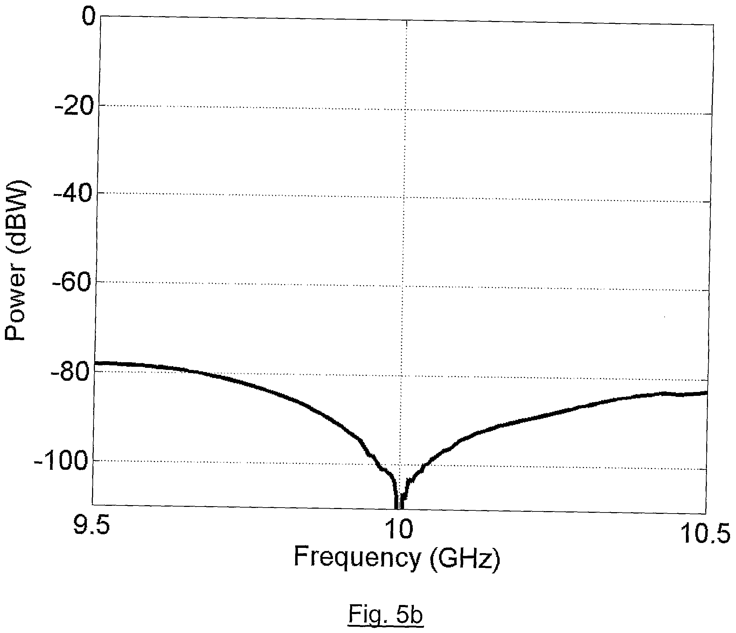

Figures 5a and 5b show the power coupling from the transmitting antenna subarray TX to the Receiving antenna subarray RX over a 1 GHz frequency band at 10 GHz for the transmitting antenna subarray TX scan direction $(\theta_0, \varphi_0)$=(0°, 0°). Figure 5a shows no zeros at the Receiving antenna subarray RX and figure 5b shows zeros at the Receiving antenna subarray RX. Equation (13) has been used for the result in figure 5b, but not in figure 5a. The excitation according to equation (13) has been determined at the center frequency 10 GHz and has thereafter been used for the whole frequency band.

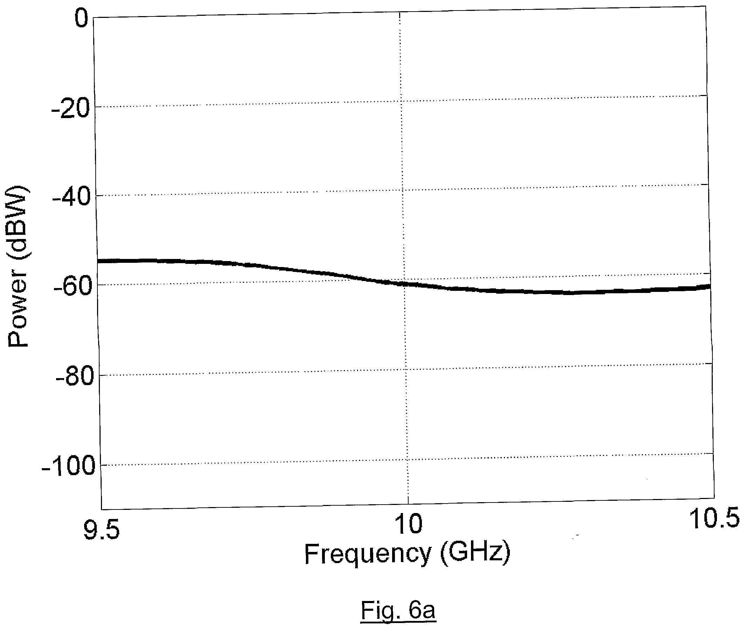

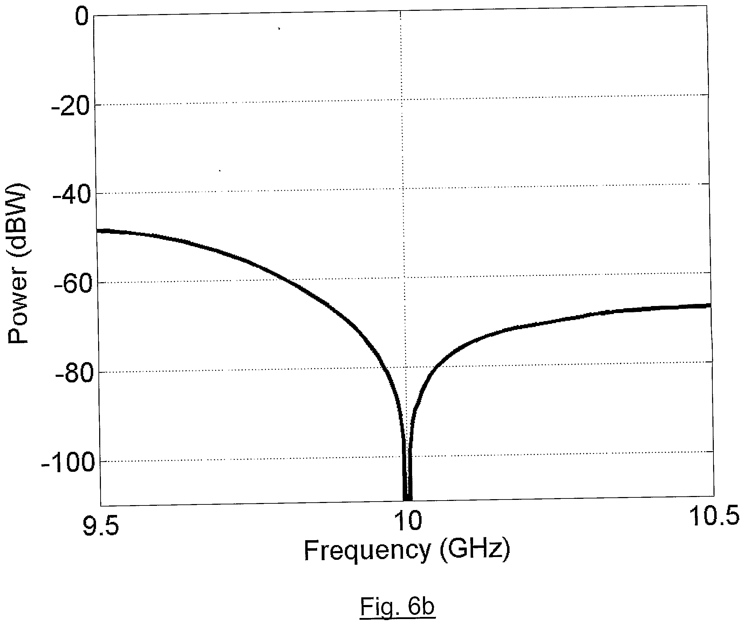

Figures 6a and 6b show the power coupling from the transmitting antenna subarray antenna TX to the receiving antenna subarray RX over a 1 GHz frequency band at 10 GHz for the transmitting antenna subarray TX scan direction $\theta_0, \varphi_0$=60°,45°, i.e. toward the receiving antenna subarray RX. Figure 6a shows no zeros at the receiving antenna subarray RX and figure 6b shows zeros at the receiving antenna subarray RX. Equation (13) has been used for the result in figure 6b, but not in figure 6a. The excitation according to equation (13) has been determined at the center frequency 10 GHz and has thereafter been used for the whole frequency band.

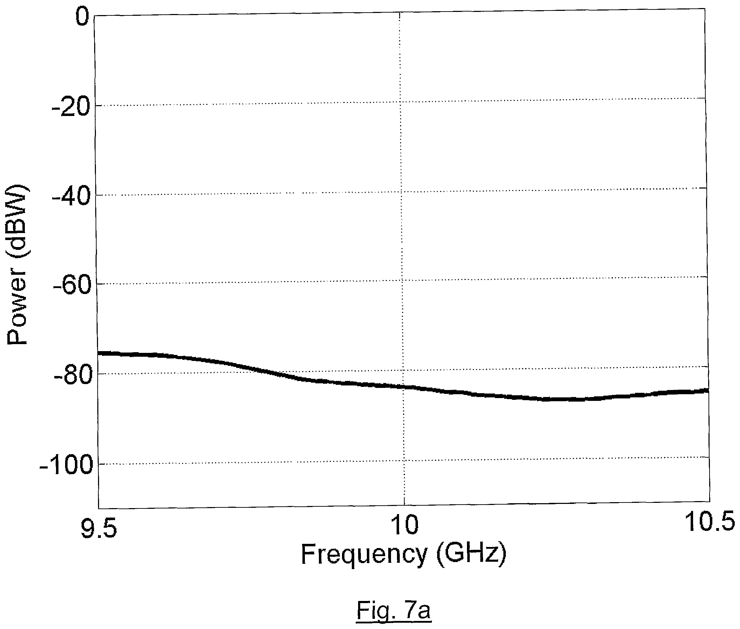

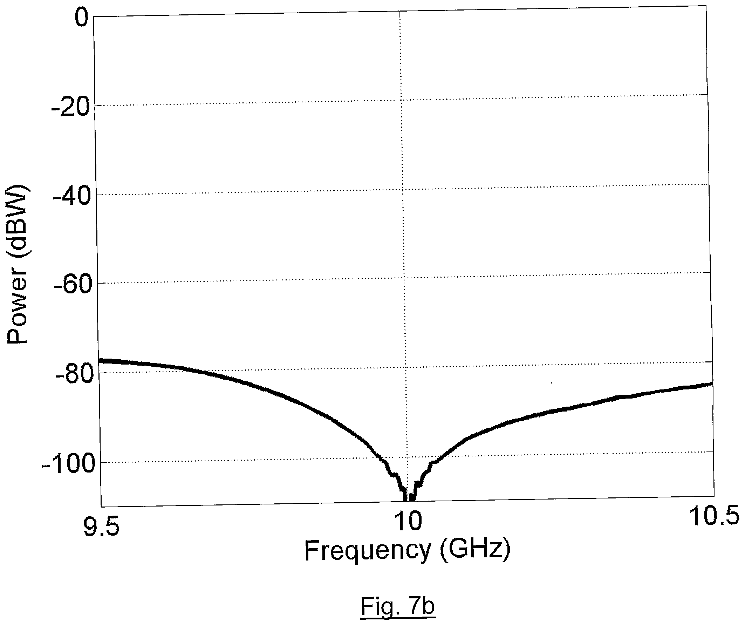

Figures 7a and 7b show the power coupling from the transmitting antenna TX to the Receiving antenna subarray RX over a 1 GHz frequency band at 10 GHz for the transmitting antenna subarray TX scan direction $(\theta_0, \varphi_0)$=60°,225°, i.e. away from the receiving antenna subarray RX. Figure 7a shows no zeros at the receiving antenna subarray RX and figure 7b shows zeros at the receiving antenna subarray RX. Equation (13) has been used for the result in figure 7b, but not in figure 7a. The excitation according to equation (13) has been determined at the center frequency 10 GHz and has thereafter been used for the whole frequency band.

Parameter study:

The dependency on some parameters in the new method for subarray to subarray coupling reduction is investigated in this section. The same $80 \times 80$ element array as in the previous section is used.

Subarray spacing:

The coupling from a $32 \times 32$ element transmitting antenna subarray TX to a $16 \times 16$ element receiving antenna subarray RX for four different spacing between the subarrays is investigated in this section.

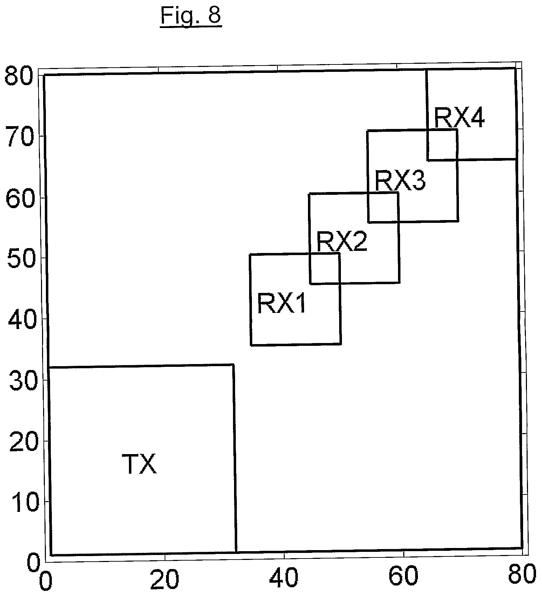

Fig. 8 schematically shows a transmitting antenna subarray TX with fixed position and four different receiving antenna subarray Rx positions relative the transmitting antenna subarray TX. The transmitting antenna subarray TX is positioned in one of the corner of the array and the receiving antenna subarray RX is positioned on the array diagonal (passing through the transmitting antenna subarray TX) at four different subarray sub-to-sub centre to centre distances D, being 37d, RX1; 51d, RX2; 65d, RX3; and 79d, RX4, where d is the element spacing. The transmitting antenna subarray TX has a uniform taper and is steered to $(\theta_0, \varphi_0) = (0°, 0°)$.

The position of the elements or the geometrical features or the material in the transmitting antenna subarray or the receiving antenna subarray are not important per se for the invention but are implicitly taken into consideration during the coupling measurements or must be known when the coupling should be calculated.

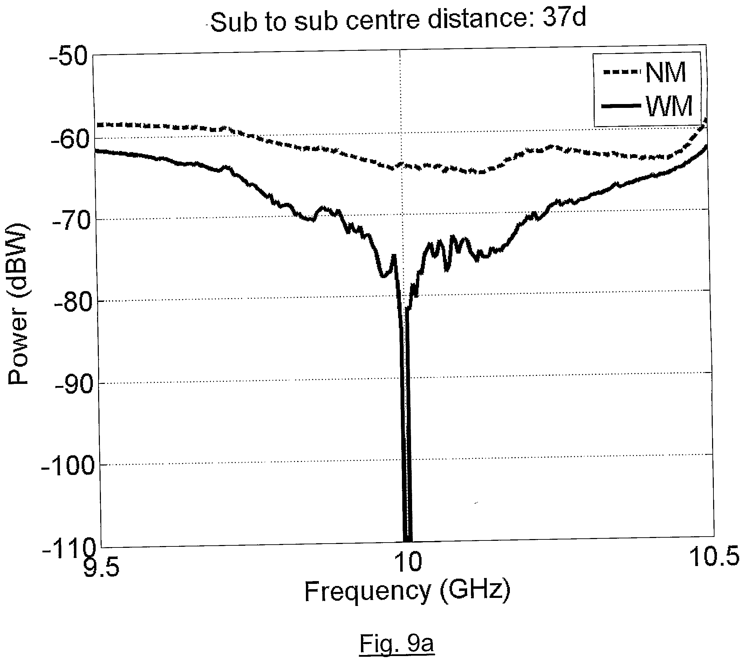

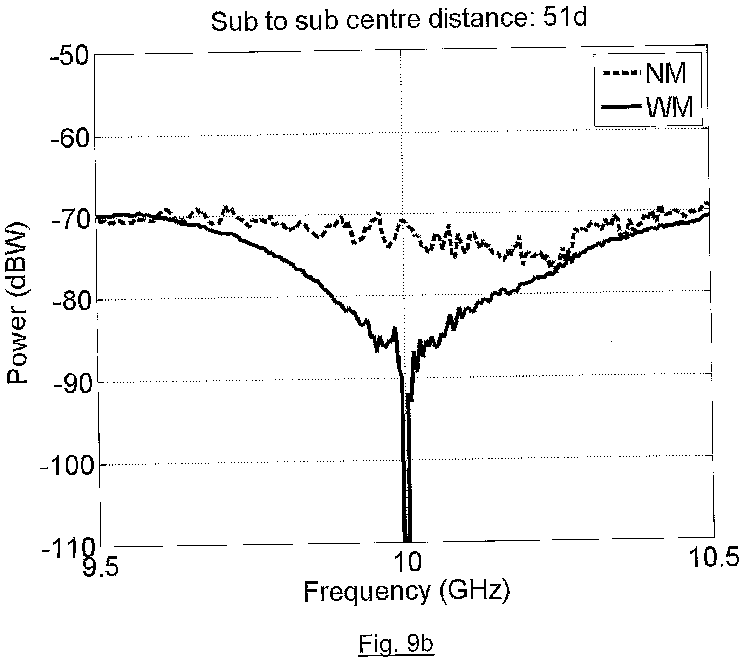

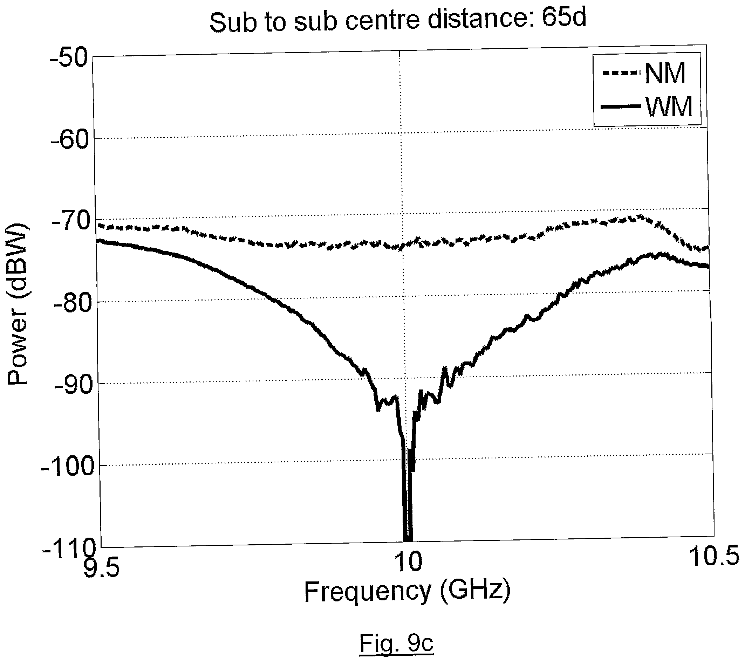

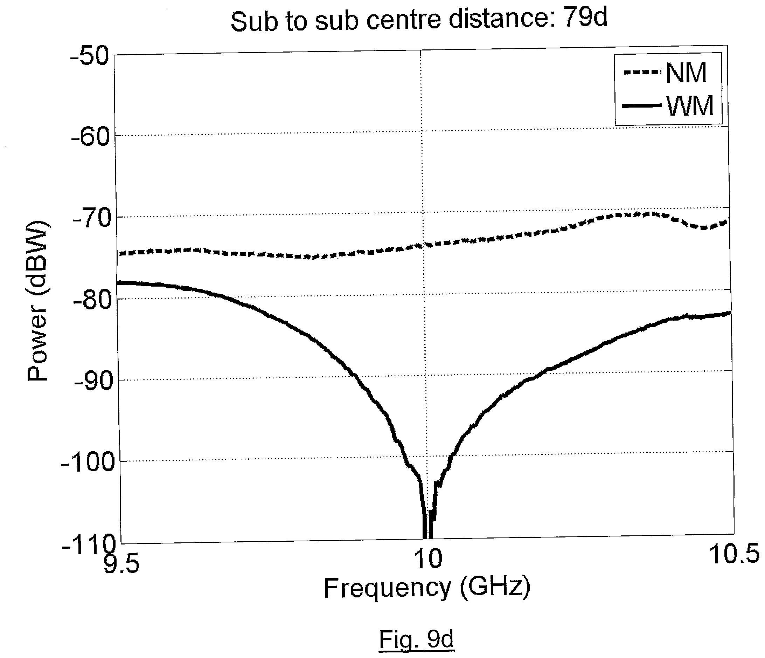

Figures 9a-9d schematically shows the transmitting antenna subarray TX power coupled to the receiving antenna subarray RX for a 9.5-10.5 GHz frequency band with and without the method according to the invention and for the four different centre distances D in figure 8. Figure 9a shows the result for the sub-to-sub centre distance 37d. Figure 9b shows the result for the sub-to-sub centre distance 51d. Figure 9c shows the result for the sub-to-sub centre distance 65d. Figure 9b shows the result for the sub-to-sub centre distance 79d.

Figures 9a-9d show the transmitting antenna subarray TX power coupled to the Receiving antenna subarray RX with use of the method according to the invention, i.e. equation (13), shown with the lower continuous line WM in figures 9a-9d and without the use of the method according to the invention shown with the upper continuous line NM in figures 9a-9d. The excitation according to equation (13) has been determined at the center frequency 10 GHz and has thereafter been used for the whole frequency band.

Sub-array size:

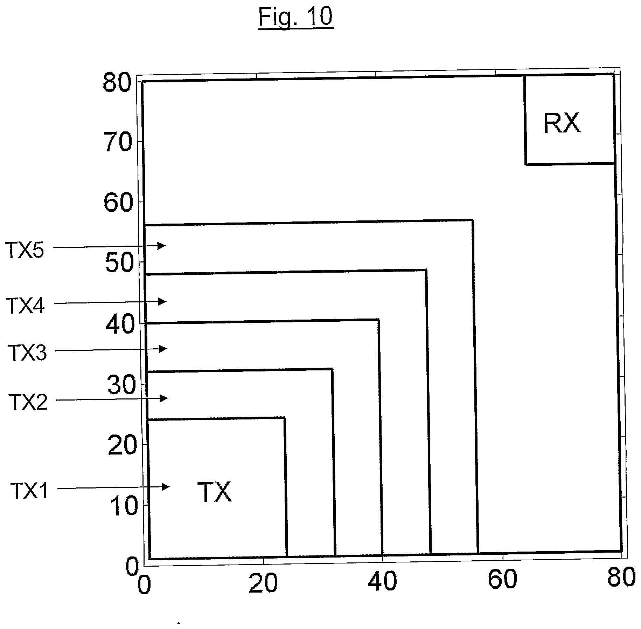

Figure 10 schematically shows five different sized transmitting antenna subarrays TX and a fixed sized and position of the receiving antenna subarray RX. The coupling from transmitting antenna subarrays TX with $24 \times 24$, TX1, $32 \times 32$, TX2, $40 \times 40$, TX3, $48 \times 48$, TX4, and $56 \times 56$, TX5, elements to a $16 \times 16$ element receiving antenna subarray RX is investigated in this section. Figure 10 shows that the transmitting antenna subarrays TX are positioned in one of the corner of the array and the receiving antenna subarray RX is positioned at the opposite corner. Observe that the centre distance D between the transmitting antenna subarray TX and the receiving antenna subarray RX decreases with increased transmitting antenna subarray TX size. The transmitting antenna subarrays TX have uniform taper and are steered to $(\theta_0, \varphi_0) = (0°, 0°)$.

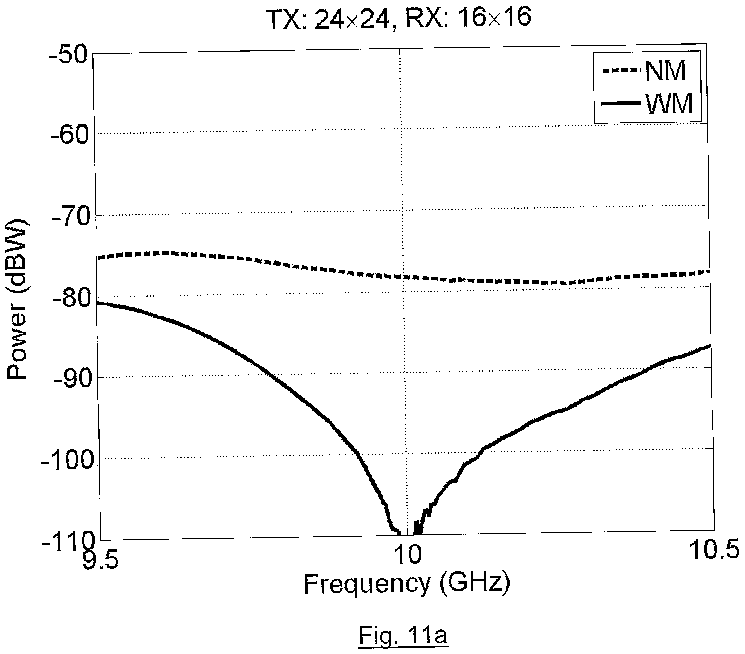

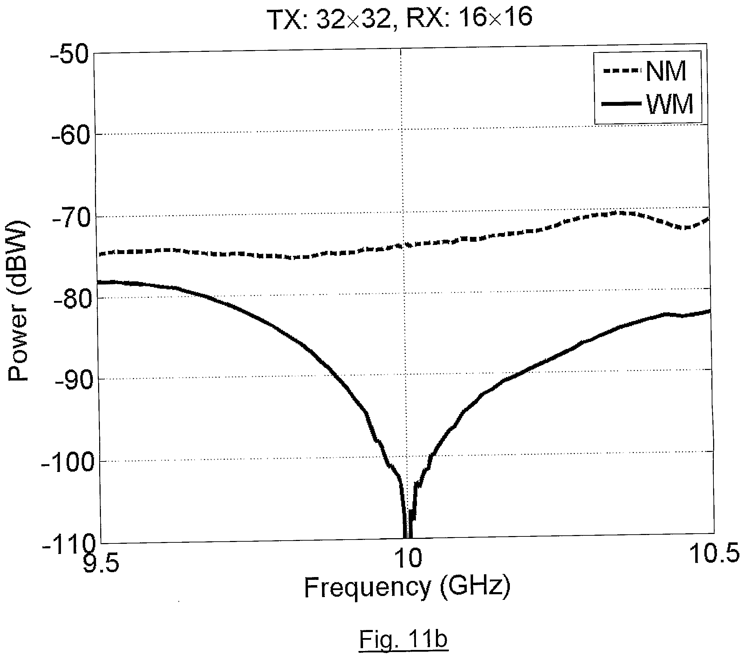

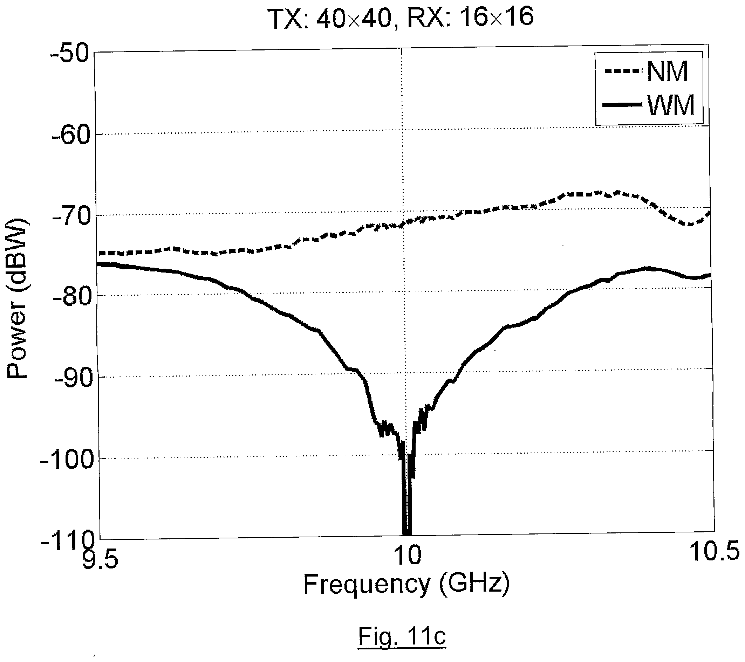

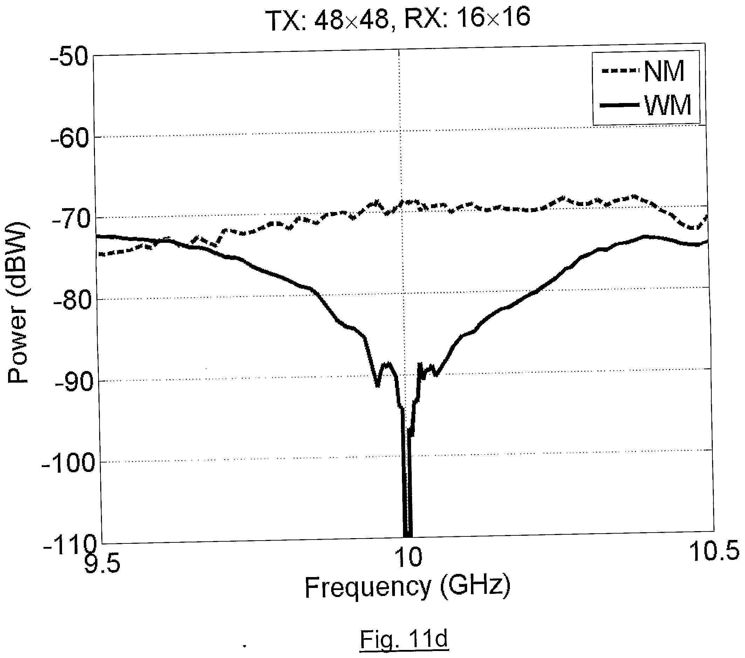

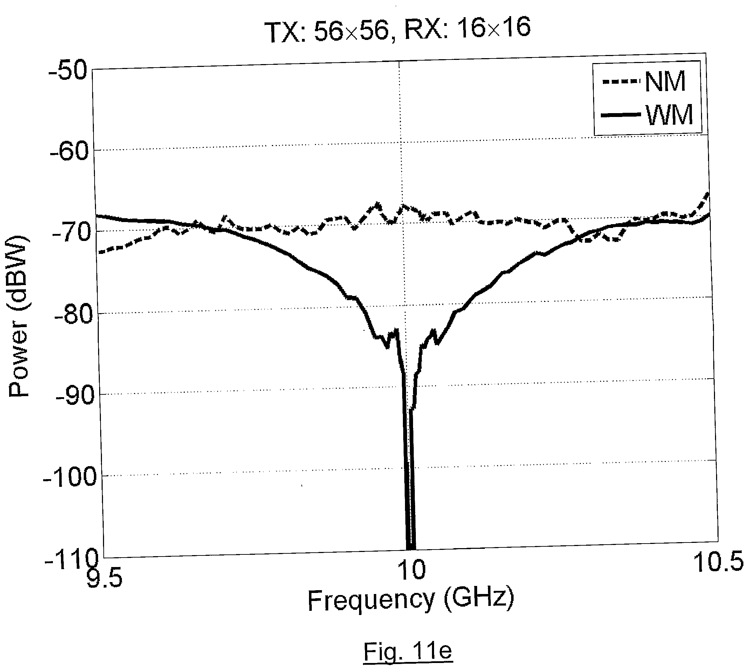

Figures 11a-11e schematically show the coupling of the transmitting antenna subarrays Tx to the receiving antenna subarray RX for the different cases in figure 10, with the use of the method according to the invention and without the use of the method.

Figures 11a-11e show the result of the subarray to subarray coupling for the five different transmitting antenna subarray TX sizes with the transmitting antenna subarray TX steered to $(\theta_0, \varphi_0) = (0°, 0°)$.).

Figures 11a-11e show the transmitting antenna subarray TX power coupled to the receiving antenna subarray RX with use of the method according to the invention, i.e. equation (13), shown with the lower continuous line WM in figures 11a-11ed and without the use of the method according to the invention shown with the upper continuous line NM in figures 11a-11e. The excitation according to equation (13) has been determined at the center frequency 10 GHz and has thereafter been used for the whole frequency band.

From figures 1-11 it becomes clear that the method according to the invention gives the desired nulling at the Receiving antenna subarray RX with different steering of the transmitting antenna subarray TX and with different sizes and positions of the transmitting antenna subarray TX and receiving antenna subarrays RX. Hence, the above examples should be used to verify that the inventive method can be used for any antenna system configuration that allows measurement or calculation of the coupling between each antenna element in the transmitting antenna subarray TX and each element in the Receiving antenna subarray RX such that a scattering-matrix can be used in equation (13).

**Claims**

1. A method for an antenna system (1) comprising a transmitting phase array antenna (2) comprising a transmitting antenna subarray (TX) comprising a number Q antenna elements (3) transmitting on a first frequency and a receiving phase array antenna (4) comprising a receiving antenna subarray (RX) comprising a number P antenna elements (5), the transmitting antenna subarray (TX) being positioned at a distance (D) relative the receiving antenna subarray (RX), wherein the transmitting antenna subarray (TX) transmits a first signal at a first time period and wherein the receiving antenna subarray (RX) receives the first signal at least partly within the first time period causing a coupling between the transmitting antenna subarray (TX) and the receiving antenna subarray (RX), **characterized in that** the coupling between the antenna elements in the transmitting antenna subarray (TX) and the antenna elements in the receiving antenna subarray (RX) are decided in a scattering-matrix $S_{BA}$ and that the scattering matrix $S_{BA}$ is used as a constraint in order to modify a quiescent excitation $x_0$ in the transmitting antenna subarray (TX) in order to get nulls at the elements (5) in the receiving antenna subarray (RX) by controlling the elements (3) in the transmitting antenna subarray (TX) to transmit a signal $x_a$ that nullifies the coupling energy in the receiving antenna subarray (RX), wherein the relation between the signal $x_a$ and the quiescent excitation $x_0$ is

$$x_a = x_0 - S_{BA}^* \left(S_{BA} S_{BA}^*\right)^{-1} S_{BA} x_0 = \left(I - S_{BA}^* \left(S_{BA} S_{BA}^*\right)^{-1} S_{BA}\right) x_0 ,$$

where $I$ is the identity matrix, and * denotes conjugate transpose.

2. A method according to claim 1, wherein Q is greater than P.

3. A method according to any one of claims 1 or 2, wherein the coupling is decided by transmitting on one antenna element (3) at a time in the transmitting antenna subarray (TX) and receiving the signal on one antenna element (5) at a time for every transmission of the antenna element (3) in the transmitting antenna subarray (TX), and wherein the transmitted signal is measured in the receiving antenna subarray (RX) giving the scattering matrix $S_{BA}$, comprising Q times P measurements representing the coupling.

4. A method according to any one of claims 1-2, wherein the coupling is decided by a numerical calculation by use of data regarding the distance from each element (3) in the transmitting antenna subarray (TX) to each element (5) in the receiving antenna subarray (RX) and data regarding material and shape of the transmitting antenna subarray (TX) and the receiving antenna subarray (RX).

5. A method according to any one of the preceding claims, wherein a modification of the quiescent excitation $x_0$ in transmitting antenna subarray (TX) is calculated by the following steps:

   a transmitting antenna subarray (TX) far-field pattern is described by the array factor

$$
\begin{aligned}
F &= \sum_m \sum_n x_{mn} e^{-jkd(mu+nv)} \\
k &= 2\pi/\lambda \\
u &= \sin\theta\cos\varphi \\
v &= \sin\theta\sin\varphi
\end{aligned}
\qquad , \qquad\qquad (1)
$$

where $x_{mn}$ ($x$ in vector form) is the complex excitation of element m, $n$ (3) in the transmitting antenna subarray (TX), $d$ is the element (3) spacing, $k$ is the wavenumber, $\lambda$ is the wavelength and $(\theta,\varphi)$ is the direction in space in spherical coordinates. The transmitting antenna subarray (TX) normal direction is given by $\theta=0$ degrees.
Let $F_0$ be the quiescent pattern of the transmitting antenna subarray (TX) obtained when no constraints regarding nulls in the receiving antenna subarray (RX) have been applied

$$F_0 = \sum_m \sum_n x_{0mn} e^{-jkd(mu+nv)}, \qquad (2)$$

where $x_{0mn}$ ($x_0$ in vector form) is the corresponding excitation.
Let $F_a$ be the approximate pattern obtained when constraints regarding nulls have been applied

$$F_a = \sum_m \sum_n x_{amn} e^{-jkd(mu+nv)}, \qquad (3)$$

where $x_{amn}$ ($x_a$ in vector form) is the corresponding excitation. Let $F_a$ be the closest approximation, in the least mean square sense, to the quiescent pattern $F_0$.

The coupling, $b$, from the elements in transmitting antenna subarray (TX) to the elements in receiving antenna subarray (RX) is

$$b = S_{BA} x, \qquad (4)$$

where $S_{BA}$ is the scattering-matrix with the transmitting antenna subarray (TX) to receiving antenna subarray (RX) mutual coupling coefficients. $S_{BA}$ is a $P \times Q$ matrix, where $P$ and $Q$ is the number of elements in receiving antenna subarray (RX) and transmitting antenna subarray (TX) respectively.

The synthesis problem can then be stated as: find the approximate pattern $F_a$ such that the mean square difference

$$\varepsilon(F_a) = \frac{d^2}{\lambda^2} \int_{-\frac{\lambda}{2d}}^{\frac{\lambda}{2d}} \int_{-\frac{\lambda}{2d}}^{\frac{\lambda}{2d}} |F_0(u,v) - F_a(u,v)|^2 \, dv \, du = \min, \qquad (5)$$

subject to the constraint

$$S_{BA} x_a = 0. \qquad (6)$$

Parseval's identity on equation (5) gives

$$\varepsilon(F_a) = \frac{d^2}{\lambda^2} \int_{-\frac{\lambda}{2d}}^{\frac{\lambda}{2d}} \int_{-\frac{\lambda}{2d}}^{\frac{\lambda}{2d}} |F_0(u,v) - F_a(u,v)|^2 \, dv \, du = \sum_m \sum_n |x_{0mn} - x_{amn}|^2 =$$

$$(x_0 - x_a)^T (\overline{x}_0 - \overline{x}_a) = \|x_0 - x_a\|^2 = \varepsilon(x_a) \qquad (7)$$

Where the horizontal bar symbol denote complex conjugate. Superscript T denotes transpose.
The synthesis problem now becomes

$$\varepsilon(x_a) = \|x_0 - x_a\|^2 = \min \qquad (8)$$

$$g(x_a) = S_{BA} x_a = 0 \qquad (9)$$

The solution to this optimization problem is obtained by using "Lagrange's multipliers"

$$\frac{\partial}{\partial x_{ai}}\left(\varepsilon(x_a)+\sum_{j=1}^{P}\beta_j g_j(x_a)\right)=0, i=1..Q, \qquad (10)$$

where $\beta$ is a complex vector to be determined. Element (3) index $mn$ has for simplicity been replaced by the single index $i$. $j$ is the receiving antenna subarray (RX) element index. Substitution of equation (8) and equation (9) in equation (10) gives

$$\frac{\partial}{\partial x_{ai}}\left((x_0-x_a)^T(\overline{x}_0-\overline{x}_a)+\sum_{j=1}^{P}\beta_j S_{BA,\text{row }j}x_a\right)=$$

$$\frac{\partial}{\partial x_{ai}}\left(x_0^T\overline{x}_0-x_0^T\overline{x}_a-x_a^T\overline{x}_0+x_a^T\overline{x}_a+\sum_{j=1}^{P}\beta_j S_{BA,\text{row }j}x_a\right)=$$

$$-\overline{x}_{0i}+\overline{x}_{ai}+\sum_{j=1}^{P}\beta_j S_{BA,ji}=-\overline{x}_{0i}+\overline{x}_{ai}+\beta^T S_{BA,\text{column }i}=0 \Leftrightarrow , \qquad (11)$$

$$-\overline{x}_0+\overline{x}_a+\left(\beta^T S_{BA}\right)^T=0 \Leftrightarrow$$

$$x_a=x_0-S_{BA}^*\overline{\beta}$$

where superscript * denote conjugate transpose. $\overline{\beta}$ is determined from equation (9) and (11)

$$0=S_{BA}x_a=S_{BA}\left(x_0-S_{BA}^*\overline{\beta}\right)=S_{BA}x_0-S_{BA}S_{BA}^*\overline{\beta} \Rightarrow$$

$$\overline{\beta}=\left(S_{BA}S_{BA}^*\right)^{-1}S_{BA}x_0 \qquad (12)$$

Substitution of equation (12) in equation (11) finally gives

$$x_a=x_0-S_{BA}^*\left(S_{BA}S_{BA}^*\right)^{-1}S_{BA}x_0=\left(I-S_{BA}^*\left(S_{BA}S_{BA}^*\right)^{-1}S_{BA}\right)x_0, \qquad (13)$$

where $I$ is the identity matrix. Equation (13) shows how to modify the quiescent excitation $x_0$ in the transmitting antenna subarray (TX) in order to get nulls at the elements in the receiving antenna subarray (RX).

**Patentansprüche**

1. Verfahren für ein Antennensystem (1) mit einer Sendephasen-Arrayantenne (2), die ein Sendeantennen-Subarray (TX) mit einer Anzahl Q von Antennenelementen (3) für das Senden auf einer ersten Frequenz umfasst, und einer Empfangsphasen-Arrayantenne (4), die ein Empfangsantennen-Subarray (RX) mit einer Anzahl P von Antennenelementen (5) umfasst, wobei das Sendeantennen-Subarray (TX) mit einer Distanz (D) relativ zu dem Empfangsantennen-Subarray (RX) positioniert ist, wobei das Sendeantennen-Subarray (TX) ein erstes Signal in einer ersten Zeitperiode sendet und wobei das Empfangsantennen-Subarray (RX) das erste Signal wenigstens teilweise innerhalb der ersten Zeitperiode empfängt, wodurch eine Kopplung zwischen dem Sendeantennen-Subarray (TX) und dem Empfangsantennen-Subarray (RX) veranlasst wird, **dadurch gekennzeichnet, dass** die Kopplung zwischen den Antennenelementen in dem Sendeantennen-Subarray (TX) und den Antennenelementen in dem Empfangsantennen-Subarray (RX) in einer Streumatrix $S_{BA}$ bestimmt wird und die Streumatrix $S_{BA}$ als eine Beschränkung verwendet wird, um eine Ruheerregung $\chi_0$ in dem Sendeantennen-Subarray (TX) derart zu modifizieren, dass Nullen an den Elementen (5) in dem Empfangsantennen-Subarray (RX) erhalten werden, indem die Elemente (3) in dem Sendeantennen-Subarray (TX) gesteuert werden, um ein Signal $x_a$ zu senden, dass die Kopplungsenergie in dem Empfangsantennen-Subarray (RX) annulliert, wobei die Beziehung zwischen dem Signal $x_a$ und der Ruheerregung $\chi_0$ ist:

$$x_a = x_0 - S_{BA}^* \left( S_{BA} S_{BA}^* \right)^{-1} S_{BA} x_0 = \left( I - S_{BA}^* \left( S_{BA} S_{BA}^* \right)^{-1} S_{BA} \right) x_0$$

wobei $I$ die Identitätsmatrix ist und * eine konjugierte Transponierte angibt.

2. Verfahren nach Anspruch 1, wobei Q größer als P ist.

3. Verfahren nach Anspruch 1 oder 2, wobei die Kopplung durch das Senden an jeweils einem Antennenelement (3) in dem Sendeantennen-Subarray (TX) und das Empfangen des Signals an jeweils einem Antennenelement (5) für jede Sendung des Antennenelements (3) in dem Sendeantennen-Subarray (TX) bestimmt wird und wobei das gesendete Signal in dem Empfangsantennen-Subarray (RX) gemessen wird, um die Streumatrix $S_{BA}$ mit Q mal P Messungen für eine Wiedergabe der Kopplung zu erhalten.

4. Verfahren nach einem der Ansprüche 1-2, wobei die Kopplung durch eine numerische Berechnung unter Verwendung von Daten in Bezug auf die Distanz von jedem Element (3) in dem Sendeantennen-Subarray (TX) zu jedem Element (5) in dem Empfangsantennen-Subarray (RX) und von Daten in Bezug auf das Material und die Form des Sendeantennen-Subarrays (TX) und des Empfangsantennen-Subarrays (RX) bestimmt wird.

5. Verfahren nach einem der vorstehenden Ansprüche, wobei eine Modifikation der Ruheerregung $\chi_0$ in dem Sende-antennen-Subarray (TX) durch die folgenden Schritte berechnet wird:

ein Sendeantennen-Subarray (TX)-Fernfeldmuster wird durch den Array-Faktor beschrieben:

$$\begin{aligned} F &= \sum_m \sum_n x_{mn} e^{-jkd(mu+nv)} \\ k &= 2\pi/\lambda \\ u &= \sin\theta\cos\varphi \\ v &= \sin\theta\sin\varphi \end{aligned} \qquad , \qquad (1)$$

wobei $\chi_{mn}$ ($\chi$ in der Vektorform) die komplexe Erregung des Elements m, $n$ (3) in dem Sendeantennen-Subarray (TX) ist, d der Element (3)-Abstand ist, $k$ die Wellenzahl ist, $\lambda$ die Wellenlänge ist und ($\theta,\varphi$) die Richtung im Raum in sphärischen Koordinaten ist, wobei die Normalrichtung des Sendeantennen-Subarrays (TX) mit $\theta=0$ Grad gegeben ist,
wenn $F_0$ das Ruhemuster des Sendeantennen-Subarrays (TX) ist, das erhalten wird, wenn keine Beschränkungen in Bezug auf Nullen in dem Empfangsantennen-Subarray (RX) angewendet wurden:

$$F_0 = \sum_m \sum_n x_{0mn} e^{-jkd(mu+nv)} \qquad , \qquad (2)$$

wobei $\chi_{0mn}$ ($\chi_0$ in der Vektorform) die entsprechende Erregung ist,
wenn $F_a$ das annähernde Muster ist, das erhalten wird, wenn Beschränkungen in Bezug auf Nullen angewendet wurden:

$$F_a = \sum_m \sum_n x_{amn} e^{-jkd(mu+nv)} \qquad , \qquad (3)$$

wobei $\chi_{amn}$ ($\chi_a$ in der Vektorform) die entsprechende Erregung ist und $F_a$ die nächste Annäherung im Sinne des kleinsten mittleren Quadrats an das Ruhemuster $F_0$ ist,
wobei die Kopplung b von den Elementen in dem Sendeantennen-Subarray (TX) zu den Elementen in dem Empfangsantennen-Subarray (RX) ist:

$$b = S_{BA} x \qquad , \qquad (4)$$

wobei $S_{BA}$ die Streumatrix mit den wechselseitigen Kopplungseffizienten von dem Sendeantennen-Subarray (TX) zu dem Empfangsantennen-Subarray (RX) ist, $S_{BA}$ eine $P \times Q$-Matrix ist, wobei P und Q die Anzahl von Elementen jeweils in dem Empfangsantennen-Subarray (RX) und dem Sendeantennen-Subarray (TX) sind, wobei das Syntheseproblem dann wie folgt gestellt werden kann: Finden des annähernden Musters $F_a$ derart, dass die mittlere quadratische Differenz ist:

$$\varepsilon(F_a) = \frac{d^2}{\lambda^2} \int\limits_{-\frac{\lambda}{2d}}^{\frac{\lambda}{2d}} \int\limits_{-\frac{\lambda}{2d}}^{\frac{\lambda}{2d}} |F_0(u,v) - F_a(u,v)|^2 \, dv du = \min \qquad , \qquad (5)$$

unter der Beschränkung

$$S_{BA} x_a = 0 \, . \qquad\qquad (6)$$

wobei die Parseval-Identität auf der Gleichung (5) ergibt:

$$\varepsilon(F_a) = \frac{d^2}{\lambda^2} \int\limits_{-\frac{\lambda}{2d}}^{\frac{\lambda}{2d}} \int\limits_{-\frac{\lambda}{2d}}^{\frac{\lambda}{2d}} |F_0(u,v) - F_a(u,v)|^2 \, dv du = \sum_m \sum_n |x_{0mn} - x_{amn}|^2 =$$

$$(x_0 - x_a)^T (\bar{x}_0 - \bar{x}_a) = \|x_0 - x_a\|^2 = \varepsilon(x_a) \qquad\qquad (7)$$

wobei das horizontale Balkensymbol eine komplexe Konjugierte angibt und der Exponent T eine Transponierte angibt,
wobei das Syntheseproblem jetzt wird:

$$\varepsilon(x_a) = \|x_0 - x_a\|^2 = \min \qquad\qquad (8)$$

$$g(x_a) = S_{BA} x_a = 0 \qquad\qquad (9)$$

wobei die Lösung zu diesem Optimierungsproblem unter Verwendung von "Lagrange-Multiplikatoren" erhalten wird:

$$\frac{\partial}{\partial x_{ai}} \left( \varepsilon(x_a) + \sum_{j-1}^{P} \beta_j g_j(x_a) \right) = 0, i = 1..Q \, , \qquad\qquad (10)$$

wobei $\beta$ ein zu bestimmender komplexer Vektor ist, der Element (3)-Index $mn$ der Einfachheit halber durch den einzelnen Index $i$ ersetzt ist, $j$ der Empfangsantennen-Subarray (RX)-Elementindex ist, wobei ein Einsetzen der Gleichungen (8) und (9) in die Gleichung (10) ergibt:

$$\frac{\partial}{\partial x_{ai}}\left(\left(x_0 - x_a\right)^T\left(\overline{x}_0 - \overline{x}_a\right) + \sum_{j=1}^{P}\beta_j S_{BA,\text{row }j} x_a\right) =$$

$$\frac{\partial}{\partial x_{ai}}\left(x_0^T\overline{x}_0 - x_0^T\overline{x}_a - x_a^T\overline{x}_0 + x_a^T\overline{x}_a + \sum_{j=1}^{P}\beta_j S_{BA,\text{row }j} x_a\right) =$$

$$-\overline{x}_{0i} + \overline{x}_{ai} + \sum_{j=1}^{P}\beta_j S_{BA,ji} = -\overline{x}_{0i} + \overline{x}_{ai} + \beta^T S_{BA,\text{column }i} = 0 \Leftrightarrow , \qquad (11)$$

$$-\overline{x}_0 + \overline{x}_a + \left(\beta^T S_{BA}\right)^T = 0 \Leftrightarrow$$

$$x_a = x_0 - S_{BA}^* \overline{\beta}$$

wobei der Exponent * eine konjugierte Transponierte angibt, $\beta$ aus der Gleichung (9) und (11) bestimmt wird:

$$0 = S_{BA}x_a = S_{BA}\left(x_0 - S_{BA}^*\overline{\beta}\right) = S_{BA}x_0 - S_{BA}S_{BA}^*\overline{\beta} \Rightarrow$$
$$\overline{\beta} = \left(S_{BA}S_{BA}^*\right)^{-1}S_{BA}x_0 \qquad (12)$$

wobei ein Einsetzen der Gleichung (12) in die Gleichung (11) schließlich ergibt:

$$x_a = x_0 - S_{BA}^*\left(S_{BA}S_{BA}^*\right)^{-1}S_{BA}x_0 = \left(I - S_{BA}^*\left(S_{BA}S_{BA}^*\right)^{-1}S_{BA}\right)x_0 , \qquad (13)$$

wobei $I$ die Identitätsmatrix ist, die Gleichung (13) angibt, wie die Ruheerregung $\chi_0$ in dem Sendeantennen-Subarray (TX) zu modifizieren ist, um Nullen an den Elementen in dem Empfangsantennen-Subarray (RX) zu erhalten.

**Revendications**

1. Procédé pour un système d'antennes (1) comprenant une antenne réseau à commande de phase d'émission (2) qui comprend un sous-réseau d'antenne d'émission (TX) qui comprend un nombre Q d'éléments d'antenne (3) qui émettent sur une première fréquence et une antenne réseau à commande de phase de réception (4) qui comprend un sous-réseau d'antenne de réception (RX) qui comprend un nombre P d'éléments d'antenne (5), le sous-réseau d'antenne d'émission (TX) étant positionné à une distance (D) par rapport au sous-réseau d'antenne de réception (RX), dans lequel le sous-réseau d'antenne d'émission (TX) émet un premier signal selon une première période temporelle et dans lequel le sous-réseau d'antenne de réception (RX) reçoit le premier signal au moins partiellement à l'intérieur de la première période temporelle, ce qui génère un couplage entre le sous-réseau d'antenne d'émission (TX) et le sous-réseau d'antenne de réception (RX), **caractérisé en ce que** les couplages entre les éléments d'antenne dans le sous-réseau d'antenne d'émission (TX) et les éléments d'antenne dans le sous-réseau d'antenne de réception (RX) sont décidés selon une matrice de diffusion $S_{BA}$ et **en ce que** la matrice de diffusion $S_{BA}$ est utilisée en tant que contrainte afin de modifier une excitation de repos $x_0$ dans le sous-réseau d'antenne d'émission (TX) afin d'obtenir des valeurs nulles au niveau des éléments (5) dans le sous-réseau d'antenne de réception (RX) en commandant les éléments (3) dans le sous-réseau d'antenne d'émission (TX) de manière à émettre un signal $x_a$ qui annule l'énergie de couplage dans le sous-réseau d'antenne de réception (RX), dans lequel la relation entre le signal $x_a$ et l'excitation de repos $x_0$ est :

$$x_a = x_0 - S_{BA}^*\left(S_{BA}S_{BA}^*\right)^{-1}S_{BA}x_0 = \left(I - S_{BA}^*\left(S_{BA}S_{BA}^*\right)^{-1}S_{BA}\right)x_0 ,$$

où I est la matrice identité et * représente la transposée conjuguée.

2. Procédé selon la revendication 1, dans lequel Q est supérieur à P.

3. Procédé selon l'une quelconque des revendications 1 et 2, dans lequel le couplage est décidé en émettant sur un élément d'antenne (3) à la fois dans le sous-réseau d'antenne d'émission (TX) et en recevant le signal sur un élément d'antenne (5) à la fois pour chaque émission de l'élément d'antenne (3) dans le sous-réseau d'antenne d'émission (TX), et dans lequel le signal émis est mesuré dans le sous-réseau d'antenne de réception (RX) en donnant la matrice de diffusion $S_{BA}$ qui comprend Q fois P mesures représentant le couplage.

4. Procédé selon l'une quelconque des revendications 1 et 2, dans lequel le couplage est décidé au moyen d'un calcul numérique au moyen de l'utilisation de données qui concernent la distance depuis chaque élément (3) dans le sous-réseau d'antenne d'émission (TX) jusqu'à chaque élément (5) dans le sous-réseau d'antenne de réception (RX) et de l'utilisation de données qui concernent le matériau et la forme du sous-réseau d'antenne d'émission (TX) et du sous-réseau d'antenne de réception (RX).

5. Procédé selon l'une quelconque des revendications qui précèdent, dans lequel une modification de l'excitation de repos $x_0$ dans le sous-réseau d'antenne d'émission (TX) est calculée au moyen des étapes qui suivant :

un motif de champ lointain du sous-réseau d'antenne d'émission (TX) est décrit au moyen du facteur de réseau :

$$F = \sum_m \sum_n x_{mn} e^{-jkd(mu+nv)}$$
$$k = 2\pi/\lambda$$
$$u = \sin\theta\cos\varphi \qquad\qquad (1)$$
$$v = \sin\theta\sin\varphi$$

facteur de réseau dans lequel $x_{mn}$ (x sous forme vectorielle) est l'excitation complexe d'un élément m, n (3) dans le sous-réseau d'antenne d'émission (TX), d est l'espacement de l'élément (3), k est le nombre d'onde, $\lambda$ est la longueur d'onde et $(\theta,\varphi)$ est la direction dans l'espace en coordonnées sphériques. La direction normale au sous-réseau d'antenne d'émission (TX) est donnée par $\theta = 0$ degré.
On suppose que $F_0$ est le motif de repos du sous-réseau d'antenne d'émission (TX) qui est obtenu lorsqu'aucune contrainte concernant des valeurs nulles dans le sous-réseau d'antenne de réception (RX) n'a été appliquée :

$$F_0 = \sum_m \sum_n x_{0mn} e^{-jkd(mu+nv)} \qquad\qquad (2)$$

où $x_{0mn}$ ($x_0$ sous forme vectorielle) est l'excitation correspondante.
On suppose que $F_a$ est le motif approché qui est obtenu lorsque des contraintes concernant des valeurs nulles ont été appliquées :

$$F_a = \sum_m \sum_n x_{amn} e^{-jkd(mu+nv)} \qquad\qquad (3)$$

où $x_{amn}$ ($x_a$ sous forme vectorielle) est l'excitation correspondante. On suppose que $F_a$ est l'approximation la plus proche, dans le sens des moindres carrés moyens, du motif de repos $F_0$.
Le couplage, b, depuis les éléments dans le sous-réseau d'antenne d'émission (TX) jusqu'aux éléments dans le sous-réseau d'antenne de réception (RX) est :

$$b = S_{BA}x \qquad\qquad (4)$$

où $S_{BA}$ est la matrice de diffusion avec les coefficients de couplage mutuel du sous-réseau d'antenne d'émission (TX) jusqu'au sous-réseau d'antenne de réception (RX). $S_{BA}$ est une matrice $P \times Q$, où P et Q sont respectivement les nombres d'éléments dans le sous-réseau d'antenne de réception (RX) et dans le sous-réseau d'antenne d'émission (TX).

Le problème de synthèse peut alors être défini comme suit : trouver le motif approché $F_a$ qui soit tel que la différence quadratique moyenne :

$$\varepsilon(F_a) = \frac{d^2}{\lambda^2} \int_{-\frac{\lambda}{2d}}^{\frac{\lambda}{2d}} \int_{-\frac{\lambda}{2d}}^{\frac{\lambda}{2d}} |F_0(u,v) - F_a(u,v)|^2 \, dvdu = \min \qquad , \qquad (5)$$

soit soumise à la contrainte

$$S_{BA} x_a = 0 \qquad (6)$$

L'identité de Parseval appliquée sur l'équation (5) donne :

$$\varepsilon(F_a) = \frac{d^2}{\lambda^2} \int_{-\frac{\lambda}{2d}}^{\frac{\lambda}{2d}} \int_{-\frac{\lambda}{2d}}^{\frac{\lambda}{2d}} |F_0(u,v) - F_a(u,v)|^2 \, dvdu = \sum_m \sum_n |x_{0mn} - x_{amn}|^2 =$$

$$(x_0 - x_a)^T (\bar{x}_0 - \bar{x}_a) = \|x_0 - x_a\|^2 = \varepsilon(x_a) \qquad (7)$$

où le symbole constitué par la barre horizontale représente le complexe conjugué. L'exposant T représente la transposée.

Le problème de synthèse devient maintenant :

$$\varepsilon(x_a) = \|x_0 - x_a\|^2 = \min \qquad (8)$$

$$g(x_a) = S_{BA} x_a = 0 \qquad (9)$$

La solution à ce problème d'optimisation est obtenue en utilisant les « multiplicateurs de Lagrange » :

$$\frac{\partial}{\partial x_{ai}} \left( \varepsilon(x_a) + \sum_{j=1}^{P} \beta_j g_j(x_a) \right) = 0, i = 1..Q, \qquad (10)$$

où $\beta$ est un vecteur complexe à déterminer. L'indice de l'élément (3) mn a, par souci de simplification, été remplacé par l'indice unique i. j est l'indice de l'élément du sous-réseau d'antenne de réception (RX). La substitution de l'équation (8) et de l'équation (9) dans l'équation (10) donne :

$$\frac{\partial}{\partial x_{ai}}\left( (x_0 - x_a)^T (\bar{x}_0 - \bar{x}_a) + \sum_{j=1}^{P} \beta_j S_{BA,\text{row } j} x_a \right) =$$

$$\frac{\partial}{\partial x_{ai}}\left( x_0^T \bar{x}_0 - x_0^T \bar{x}_a - x_a^T \bar{x}_0 + x_a^T \bar{x}_a + \sum_{j=1}^{P} \beta_j S_{BA,\text{row } j} x_a \right) =$$

$$-\bar{x}_{0i} + \bar{x}_{ai} + \sum_{j=1}^{P} \beta_j S_{BA,\,ji} = -\bar{x}_{0i} + \bar{x}_{ai} + \beta^T S_{BA,\text{column } i} = 0 \Leftrightarrow, \quad (11)$$

$$-\bar{x}_0 + \bar{x}_a + \left(\beta^T S_{BA}\right)^T = 0 \Leftrightarrow$$

$$x_a = x_0 - S_{BA}^* \bar{\beta}$$

où l'exposant * représente la transposée conjuguée. $\beta$ est déterminé à partir des équations (9) et (11) :

$$0 = S_{BA} x_a = S_{BA}\left(x_0 - S_{BA}^* \bar{\beta}\right) = S_{BA} x_0 - S_{BA} S_{BA}^* \bar{\beta} \Rightarrow$$

$$\bar{\beta} = \left(S_{BA} S_{BA}^*\right)^{-1} S_{BA} x_0 \qquad (12)$$

La substitution de l'équation (12) dans l'équation (11) donne pour finir :

$$x_a = x_0 - S_{BA}^* \left(S_{BA} S_{BA}^*\right)^{-1} S_{BA} x_0 = \left(I - S_{BA}^* \left(S_{BA} S_{BA}^*\right)^{-1} S_{BA}\right) x_0, \qquad (13)$$

où I est la matrice identité. L'équation (13) représente comment modifier l'excitation de repos $x_0$ dans le sous-réseau d'antenne d'émission (TX) afin d'obtenir des valeurs nulles au niveau des éléments dans le sous-réseau d'antenne de réception (RX).

Fig. 1

Fig. 2

EP 2 504 927 B1

Fig. 3

Fig. 4

| 11 | → | 12 | → | 13 |

Fig. 5a

EP 2 504 927 B1

Fig. 5b

Fig. 6a

Fig. 6b

EP 2 504 927 B1

Fig. 7a

EP 2 504 927 B1

Fig. 7b

Fig. 8

EP 2 504 927 B1

Sub to sub centre distance: 37d

Fig. 9a

EP 2 504 927 B1

Sub to sub centre distance: 51d

Fig. 9b

EP 2 504 927 B1

Sub to sub centre distance: 65d

NM
WM

Power (dBW)

Frequency (GHz)

Fig. 9c

Sub to sub centre distance: 79d

Fig. 9d

EP 2 504 927 B1

Fig. 10

TX: 24×24, RX: 16×16

Fig. 11a

EP 2 504 927 B1

Fig. 11b

TX: 40×40, RX: 16×16

Fig. 11c

EP 2 504 927 B1

Fig. 11d

Fig. 11e

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Mutual Coupling Compensation in Arrays Using a Spherical Wave Expansion of the Radiated Field. **CORCOLES J et al.** IEEE ANTENNAS AND WIRELESS PROPAGATION LETTERS. IEEE, 09 January 2009, vol. 8, 108-111